# EUROPEAN PATENT SPECIFICATION

(11) **EP 3 985 551 B1**
(45) Date of publication and mention of the grant of the patent: **31.12.2025**
(21) Application number: 20201676.2
(22) Date of filing: 14.10.2020
(51) Int. Cl.: G06T 7/11, G06V 10/764, G06V 10/26, G06V 10/82, G06V 20/58

(54) **END-TO-END PANOPTIC SEGMENTATION WITH INTEGRATED CLUSTERING-BASED INSTANCES SEPARATION**
PANOPTISCHE END-ZU-END-SEGMENTIERUNG MIT INTEGRIERTER CLUSTERING-BASIERTER TRENNUNG DER INSTANZEN
SEGMENTATION PANOPTIQUE DE BOUT EN BOUT AVEC SÉPARATION D'INSTANCES INTÉGRÉE À BASE DE REGROUPEMENT

(43) Date of publication of application: 20.04.2022
(73) Proprietor: Bayerische Motoren Werke Aktiengesellschaft, 80809 München (DE)
(72) Inventor: Gasperini, Stefano, 80809 München (DE); Nikouei Mahani, Mohammad-Ali, 80807 München (DE); Marcos-Ramiro, Alvaro, 81541 München (DE)

(56) References cited:
- CHENG BOWEN ET AL: "Panoptic-DeepLab: A Simple, Strong, and Fast Baseline for Bottom-Up Panoptic Segmentation", 2020 IEEE/CVF CONFERENCE ON COMPUTER VISION AND PATTERN RECOGNITION (CVPR), IEEE, 13 June 2020 (2020-06-13), pages 12472 - 12482, XP033804759, DOI: 10.1109/CVPR42600.2020.01249
- CHEN LIANG-CHIEH ET AL: "Encoder-Decoder with Atrous Separable Convolution for Semantic Image Segmentation", 6 October 2018, ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 833 - 8, ISBN: 978-3-642-17318-9, XP047488272
- MOHAN ROHIT ET AL: "Efficient Panoptic Segmentation", 28 May 2020 (2020-05-28), XP055788583, Retrieved from the Internet <URL:https://web.archive.org/web/20200528235556/http://panoptic.cs.uni-freiburg.de/> [retrieved on 20210322]
- HARSHIT KUMAR: "Introduction to Panoptic Segmentation: A Tutorial", 18 October 2019 (2019-10-18), pages 1 - 8, XP055788566, Retrieved from the Internet <URL:https://kharshit.github.io/blog/2019/10/18/introduction-to-panoptic-segmentation-tutorial> [retrieved on 20210322]

## Description

### FIELD

Embodiments of the present disclosure relate to a system for panoptic segmentation of sensory information, a driving assistance system having the system, a vehicle having the system, and a method for panoptic segmentation of sensory information. Embodiments of the present disclosure particularly relate to automated driving using panoptic segmentation to interpret an environment of a vehicle.

### BACKGROUND

Automated driving, such as autonomous driving, is becoming increasingly important. For example, an autonomous vehicle can sense an environment thereof and move safely with little or no human input. Driving assistance systems for automated driving may use a combination of different sensors to detect the vehicle's environment. For example, the sensors may include radar, Lidar, ultrasonic sensors, GPS, odometry and inertial measurement modules. The driving assistance system interprets sensory information to identify appropriate navigation paths, as well as obstacles and relevant signage.

To meet safety requirements, the sensory information must be reliably processed and interpreted. Since the vehicle environment includes many different moving objects/subjects such as different types of vehicles, humans and animals, as well as different static objects such as garbage cans, traffic guidance systems, natural objects and terrain, a correct interpretation of the sensory information can be a challenge.

In view of the above, new systems and methods that overcome at least some of the problems in the art are beneficial.

B. Cheng et al. ("Panoptic-DeepLab: A Simple, Strong, and Fast Baseline for Bottom-Up Panoptic Segmentation," 2020 IEEE/CVF Conference on Computer Vision and Pattern Recognition (CVPR), 2020, pp. 12472-12482, doi: 10.1109/CVPR42600.2020.01249) describes Panoptic-DeepLab which adopts dual-ASPP and dual-decoder structures specific to semantic segmentation and instance segmentation, respectively. The semantic segmentation branch is the same as the typical design of any semantic segmentation model (e.g., DeepLab), while the instance segmentation branch is class-agnostic, involving a simple instance center regression.

### SUMMARY

In light of the above, a system for panoptic segmentation of sensory information, a driving assistance system having the system, a vehicle having the system, a method and a machine readable medium according to the appended independent claims for panoptic segmentation of sensory information are provided.

It is an object of the present disclosure to provide a correct and efficient interpretation of sensory information. It is another object of the present disclosure to reduce processing times and the use of processing resources in the control of a vehicle.

Further aspects, benefits, and features of the present disclosure are apparent from the claims, the description, and the accompanying drawings.

According to an independent aspect of the present disclosure, a system for panoptic segmentation of sensory information is provided. The system includes a shared encoder configured for feature extraction from the sensory information, a first decoder and prediction module configured for semantic prediction of the sensory information; a second decoder and prediction module configured for instance prediction of the sensory information, wherein the second decoder and prediction module is configured to directly provide instance IDs by implementing deep learning-based clustering which instills clustering capabilities directly in the neural network weights, allowing the network to group inputs into objects (e.g. cars, people, bicycles, etc.) and output instance IDs, without the need for external grouping techniques; and a panoptic prediction module configured to provide a panoptic prediction based on the semantic prediction and the instance prediction provided by the first decoder and prediction module and the second decoder and prediction module, respectively.

The first decoder and prediction module and the second decoder and prediction module may be configured to process data in parallel (simultaneously).

The term "module" as used throughout the present application may be understood in the sense of software components or software instances which are designed to implement different tasks of the system for panoptic segmentation, such as semantic segmentation or instance segmentation. The term "module" may in particular refer to a module in machine learning terms, wherein all of these modules are part of the same integrated system.

Panoptic segmentation unifies the typically distinct tasks of semantic segmentation, i.e. the assignment of a class label to each pixel, and instance segmentation, i.e. to detect and segment each object instance. For example, in the imaging domain, semantic segmentation is the task of assigning a semantic meaning to each pixel of the input image, e.g. distinguishing cars, pedestrians, bikes, road, curb, vegetation, buildings, poles, signs, etc. While semantic segmentation can give a meaning to each and every pixel/point, both for uncountable "stuff" classes (e.g. road), and countable "thing" classes (e.g. cars), instance segmentation aims at detecting the single instances of only countable elements ("thing" classes). Panoptic segmentation goes a step forward towards more comprehensive scene understanding, by unifying the two tasks.

According to the embodiments of the present disclosure, the instance prediction is done by using deep learning-based clustering. In particular, the second decoder and prediction module is trained to directly cluster the instances and perform instance segmentation as class-agnostic semantic segmentation. This means that the second decoder and prediction module transforms the instance segmentation task into class-agnostic semantic segmentation, predicting on every point/pixel, but independent of the semantic class, rather according to the instance clusters. Thereby, the system for panoptic segmentation of sensory information according to the present disclosure provides a correct and efficient interpretation of sensory information with reduced processing times and reduced processing resources. Accordingly, a more efficient and reliable control of a vehicle, and in particular an autonomous vehicle, can be achieved.

According to some embodiments, which can be combined with other embodiments described herein, the first decoder and prediction module of the system defines or provides a segmentation branch of the system for panoptic prediction. Likewise, the second decoder and prediction module of the system defines or provides an instance branch of the system for panoptic prediction. In particular, the the input may go through the shared encoder which extracts features useful for the decoders and their respective branch.

According to some embodiments, which can be combined with other embodiments described herein, an architecture of the first decoder and prediction module (i.e. the segmentation branch) and an architecture of the second decoder and prediction module (i.e. the instance branch) are at least partially symmetrical. In particular, the decoder architecture of the segmentation branch and the decoder architecture of the instance branch may be the same. For example, at inference time the branches may be identical, and what changes is at training time, due to the deep learning-based clustering solution to enable the neural network to group the inputs according to the object instances. Accordingly, the system is end-to-end trainable, bottom-up or proposal-free, single-stage and efficient as not only it combines multiple tasks, but also does not strictly require any further post-processing to extract the instances. Further, most of the computation may be done for the feature extraction, which is shared between the two branches.

The training time is when the system is learning. After learning, it can be used to infer on new data, therefore "at inference time" means when the system is actually used, e.g. in vehicle. Thus, drawbacks at training time are not problematic, because learning happens in a lab computer or server. What actually matters is everything happening at inference time, when one uses the system in the field.

According to some embodiments, which can be combined with other embodiments described herein, the system is configured to filter the instance prediction based on the semantic prediction. Thereby, "stuff" such as roads, trees, etc. can be removed from the instance prediction.

According to some embodiments, which can be combined with other embodiments described herein, the sensory information may include two-dimensional data and/or three-dimensional data. For example, the two-dimensional data can be image data and/or the three-dimensional data can be Lidar data, and in particular a Lidar point cloud. In particular, the panoptic segmentation of the present disclosure is applicable to Lidar point clouds without requiring any post-processing step to group the instances, delivering instead ready-to-use instance IDs.

According to some embodiments, which can be combined with other embodiments described herein, the system can be configured to provide the panoptic prediction to a driving assistance system. The driving assistance system may be configured for automated driving of a vehicle.

According to some embodiments, which can be combined with other embodiments described herein, the shared encoder, the first decoder and prediction module, the second decoder and prediction module and the panoptic prediction module may be included in single module having one or more processors configured to implement the aspects of each module of the system for panoptic prediction.

According to another independent aspect of the present disclosure, a driving assistance system for a vehicle is provided. The driving assistance system includes the system for panoptic segmentation of sensory information according to the embodiments of the present disclosure and at least one sensor configured to provide the sensory information. The driving assistance system is configured for automated driving based on at least panoptic prediction. In particular, the driving assistance system may use the panoptic prediction provided by the system for panoptic segmentation of sensory information to control the vehicle.

The driving assistance system is configured for automated driving. A classification system of automated driving with six levels - ranging from fully manual to fully automated systems - was published in 2014 by SAE International, an automotive standardization body, as J3016, Taxonomy and Definitions for Terms Related to On-Road Motor Vehicle Automated Driving Systems.

In some embodiments, the driving assistance system is configured for automated driving according to SAE level 5: No human intervention is required at all ("autonomous driving").

The driving assistance system includes the at least one sensor which may provide the sensory information for processing by the system of the present disclosure to provide panoptic prediction.

According to some embodiments, which can be combined with other embodiments described herein, the at least sensor one includes at least one Lidar ("light detection and ranging") system and/or at least one radar system and/or at least one camera system and/or at least one ultrasonic system and/or at least one laser scanner system. The at least one senor can provide the sensory information that indicate an area surrounding the vehicle.

According to another independent aspect of the present disclosure, a vehicle is provided. The vehicle includes the driving assistance system for a vehicle and/or the system for panoptic segmentation of sensory information according to the embodiments of the present disclosure.

The term vehicle includes passenger cars, trucks, buses, mobile homes, motorcycles, etc., which serve to transport people, goods, etc. In particular, the term includes motor vehicles for the transport of persons.

According to some embodiments, which can be combined with other embodiments described herein, the vehicle is an autonomous vehicle. Autonomous vehicles can be configured for driverless driving, where the vehicle can automatically handle all situations like a human driver during the entire journey; a driver is generally no longer required.

According to another independent aspect of the present disclosure, a method for panoptic segmentation of sensory information is provided. The method includes performing semantic prediction of sensory information; performing instance prediction of the sensory information by implementing deep learning-based clustering; and performing panoptic prediction based on the semantic prediction and the instance prediction.

Embodiments are also directed at systems for carrying out the disclosed methods and include system aspects for performing each described method aspect. These method aspects may be performed by way of hardware components, a computer programmed by appropriate software, by any combination of the two or in any other manner. Furthermore, embodiments according to the invention are also directed at methods for operating the described system. It includes method aspects for carrying out every function of the system.

According to another independent aspect of the present disclosure, a machine-readable medium is provided. The machine-readable medium includes instructions executable by one or more processors to implement the method for panoptic segmentation of sensory information of the embodiments of the present disclosure.

The (e.g. non-transitory) machine readable medium may include, for example, optical media such as CD-ROMs and digital video disks (DVDs), and semiconductor memory devices such as Electrically Programmable Read-Only Memory (EPROM), and Electrically Erasable Programmable Read-Only Memory (EEPROM). The machine-readable medium may be used to tangibly retain computer program instructions or code organized into one or more modules and written in any desired computer programming language. When executed by, for example, one or more processors such computer program code may implement one or more of the methods described herein.

According to another independent aspect of the present disclosure, a system for panoptic segmentation of sensory information is provided. The system includes one or more processors; and a memory (e.g. the above machine-readable medium) coupled to the one or more processors and comprising instructions executable by the one or more processors to implement the method for panoptic segmentation of sensory information of the embodiments of the present disclosure.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: shows a system for panoptic segmentation of sensory information according to embodiments described herein;
- FIG. 2A: shows a system for panoptic segmentation of sensory information according to further embodiments described herein;
- FIG. 2B: shows panoptic segmentation of sensory information according to embodiments described herein;
- FIG. 3: shows a vehicle having a driving assistance system for automated driving according to embodiments described herein; and
- FIG. 4: shows a flowchart of a method for panoptic segmentation of sensory information according to embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

A fundamental part of automated driving is the understanding of the environment surrounding the vehicle. To understand the surrounding environment, sensory information must be reliably processed and interpreted. Since the vehicle environment includes many different moving objects/subjects such as different types of vehicles, humans and animals, as well as different static objects such as garbage cans, traffic guidance systems, natural objects and terrain, a correct interpretation of the sensory information can be a challenge.

The present disclosure suggests panoptic segmentation with a deep learning-based clustering approach to identify the instances, on top of a semantic segmentation branch. Panoptic predictions integrate both semantic and instance predictions. Both branches give a prediction for each input, such as a 3D point or image pixel. Then, in order to deliver a unified and consistent panoptic segmentation prediction, the semantic predictions may be used to consider the instances only for those "thing" classes. "Thing" classes are those semantic classes that are countable and can be separated into instances.

Thereby, the panoptic segmentation according to the present disclosure provides a correct and efficient interpretation of sensory information with reduced processing times and reduced processing resources. Accordingly, a more efficient and reliable control of a vehicle, and in particular an autonomous vehicle, can be achieved.

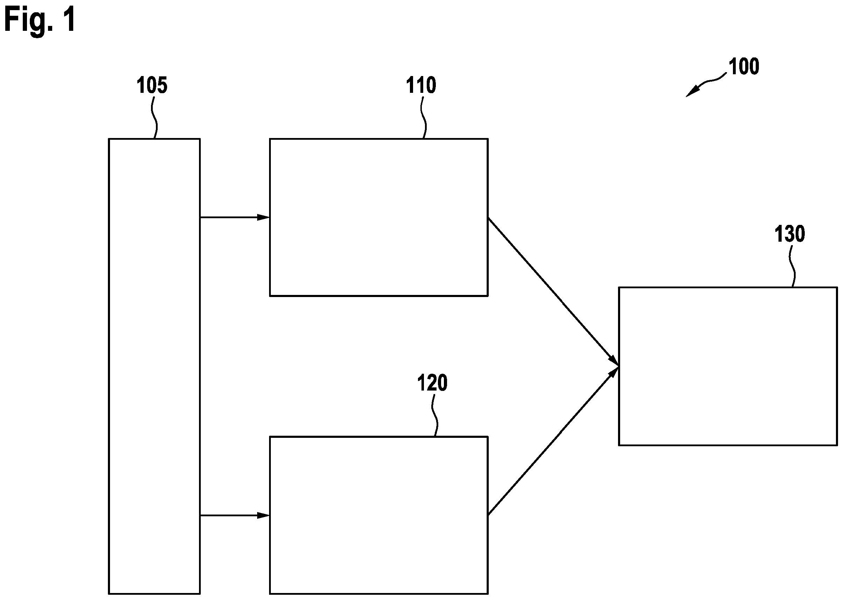

FIG. 1 shows a system 100 for panoptic segmentation of sensory information according to embodiments of the present disclosure.

The system 100 includes a shared encoder 105 configured for feature extraction; a first decoder and prediction module 110 configured for semantic prediction of sensory information; a second decoder and prediction module 120 configured for instance prediction of the sensory information, wherein the second decoder and prediction module 120 is configured to provide the instance prediction by implementing deep learning-based clustering, allowing a neural network to directly group portions of input into object instances; and a panoptic prediction module 130 configured to provide a panoptic prediction based on the semantic prediction and the instance prediction provided by the first decoder and prediction module 110 and the second decoder and prediction module 120, respectively.

The shared encoder 105 is configured for feature extraction. "Feature" is used in machine learning and extracting features means abstracting characteristics from the input, which are useful for the task at hand. The extraction can be done via rule-based approaches, but in deep learning, this extraction is data driven and part of the learning/optimization process happening at training time.

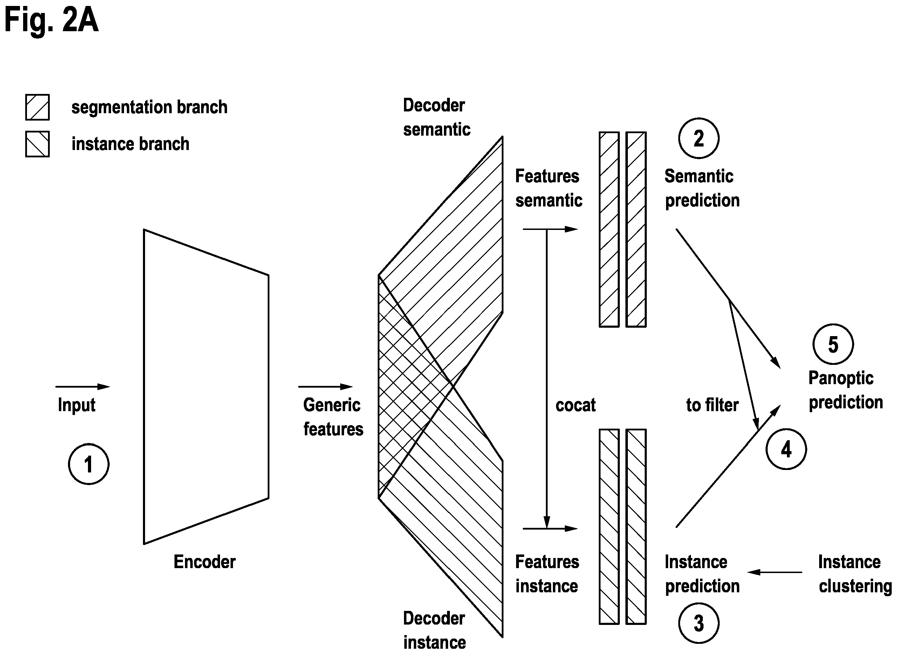

FIG. 2A shows a system 200 for panoptic segmentation of sensory information according to an exemplary embodiment of the present disclosure.

The system 200 may include a neural network (NN) following an encoder-decoder architecture. Typically, the encoder extracts features from the input, while the decoder makes use of these depending on the task. In the present case, one encoder and two decoders are used. Therefore, one branch is dedicated to semantic prediction, and another branch is dedicated to instance prediction.

The neural network can be trained minimizing a series of loss functions. For the semantic loss, a standard approach such as cross-entropy can be used. For the instance loss, an alternative approach can be used to optimize clusters. These clusters are groupings of pixels/points that belong to a single instance.

An exemplary approach for the instance loss is using a confusion matrix for each input (comparing predicted instances/clusters against ground truth instances/clusters) as a control panel, to tweak the neural network performance and lead the training optimization for the clusters. From a confusion matrix, loss functions can be derived and optimized, aiming at pure and non-fragmented clusters. This approach allows to jointly train panoptic segmentation (semantic segmentation and instance segmentation) end-to-end.

Furthermore, this approach is entirely learning-based, allowing for instance IDs to be directly output by the neural network. So everything, from the input to the feature extraction and all the way to the assignment of instance IDs is handled by the same neural network, which can comprehensively take into account the sensory data from the surrounding environment to perform its panoptic task and deliver its predictions.

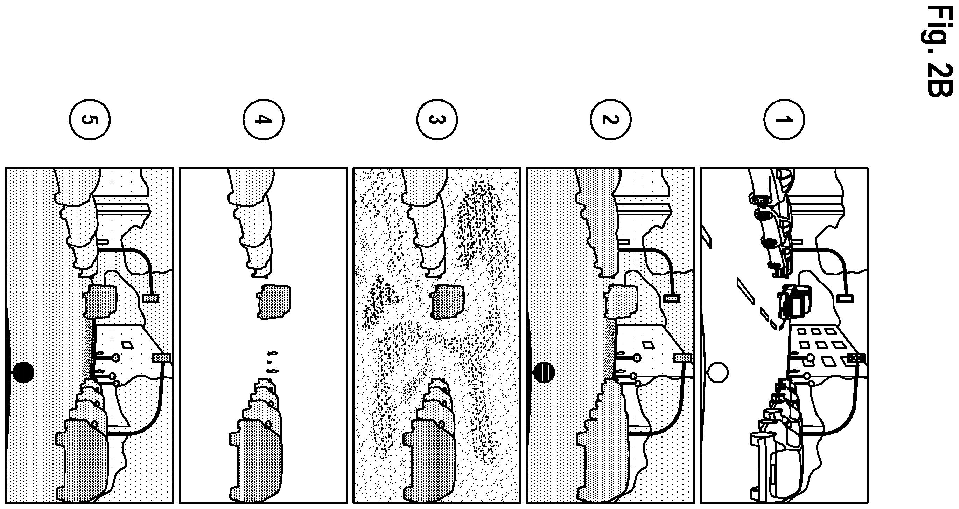

The decoder of the instance branch may have the same structure as the decoder of the semantic branch. In other words, the decoder architecture of the instance branch and the decoder architecture of the semantic branch may be symmetrical. This symmetry can be achieved, for example, by the above-mentioned loss functions which are based on the confusion matrices.FIG. 2B shows panoptic segmentation of image sensory information according to embodiments of the present disclosure (see also numbers 1-5 in FIG. 2A).

Input ("1"): The input can be an image (RGB, RGBD) or a point cloud (points directly, range image, etc.). This provides a flexible and multi-purpose approach.

Semantic branch ("2"): The semantic branch makes a prediction for every pixel/point and gives them a semantic meaning. The encoder and the semantic branch can be any semantic segmentation architecture.

Instance branch ("3"): The instance branch makes a prediction for every pixel/point and gives them an instance ID. This is achieved with a deep learning-based clustering method. At inference time, since the clustering capability has been instilled right in the network internal weights during training, this branch may process data exactly as the semantic branch, making the architecture symmetric and efficient.

Filtering ("4"): The semantic prediction is used to filter the instance prediction and remove "stuff" pixels/points (road, trees, etc.). The approach is bottom-up or proposal free: from the semantic prediction instances are clustered within the object classes (things).

Panoptic prediction ("5"): The semantic prediction and the instance prediction are combined to form the panoptic prediction. No further post-processing is required but can be beneficial. The instance predictions are ready to use as instance IDs.

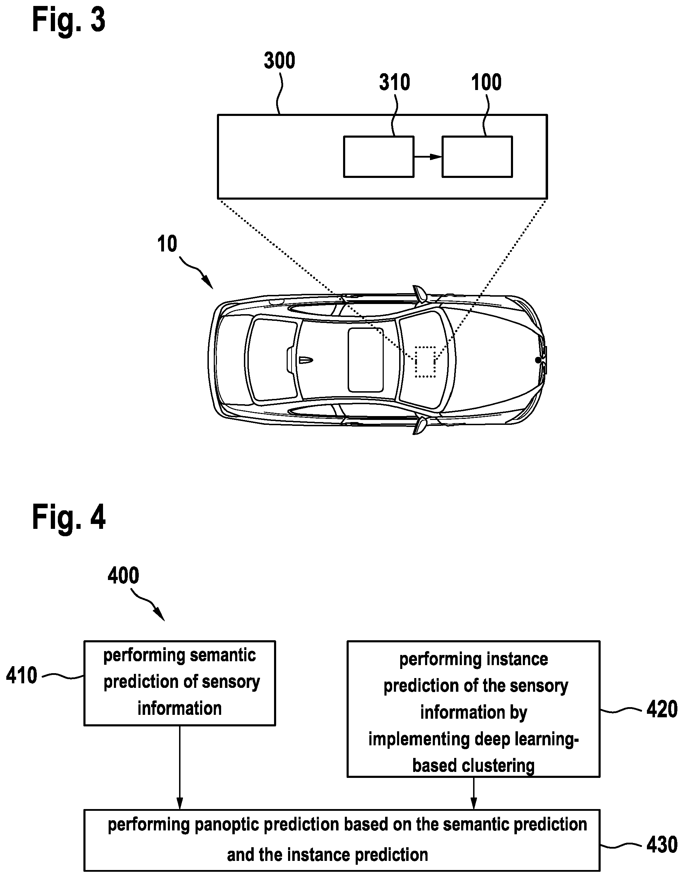

FIG. 3 shows a vehicle 10 having a driving assistance system 300 for automated driving according to embodiments described herein.

The driving assistance system 300 includes the system 100 for panoptic segmentation of sensory information according to the embodiments of the present disclosure and at least one sensor 310 configured to provide the sensory information. The driving assistance system 300 is configured for automated driving based on at least panoptic prediction. In particular, the driving assistance system 300 may use the panoptic prediction provided by the system 100 for panoptic segmentation of sensory information to control the vehicle 10.

In some embodiments, the driving assistance system 300 may be configured for automated driving according to SAE level 5: No human intervention is required at all ("autonomous driving").

The driving assistance system 300 includes the at least one sensor 310 which may provide the sensory information which is processed by the system 100 to provide panoptic prediction. The at least one sensor may include at least one Lidar ("light detection and ranging") system and/or at least one radar system and/or at least one camera system and/or at least one ultrasonic system and/or at least one laser scanner system. The at least one senor can provide the sensory information that indicate an area surrounding the vehicle.

FIG. 4 shows a flowchart of a method 400 for panoptic segmentation of sensory information according to embodiments described herein.

The method 400 includes in block 410 performing semantic prediction of sensory information; in block 420 performing instance prediction of the sensory information by implementing deep learning-based clustering; and in block 430 performing panoptic prediction based on the semantic prediction and the instance prediction.

In a preferred embodiment, blocks 410 and 420 can be executed simultaneously.

According to the embodiments of the present disclosure, the instance prediction is done by using deep learning-based clustering. In particular, the instance prediction branch is trained to directly cluster the instances. Thereby, the panoptic segmentation of sensory information according to the present disclosure provides a correct and efficient interpretation of sensory information with reduced processing times and reduced processing resources. Accordingly, a more efficient and reliable control of a vehicle, and in particular an autonomous vehicle, can be achieved.

While the foregoing is directed to embodiments of the disclosure, other and further embodiments of the disclosure may be devised without departing from the basic scope thereof, and the scope thereof is determined by the claims that follow.

While the foregoing is directed to embodiments of the disclosure, other and further embodiments of the disclosure may be devised without departing from the basic scope thereof, and the scope thereof is determined by the claims that follow.

## Claims

1. A system (100) for panoptic segmentation of sensory information, comprising:
a shared encoder (105) configured for feature extraction from sensory information;
a first decoder and prediction module (110) configured for semantic prediction of the sensory information;
a second decoder and prediction module (120) configured for instance prediction of the sensory information, wherein the second decoder and prediction module (120) is configured to directly provide instance IDs by implementing deep learning-based clustering which instills clustering capabilities directly in the neural network weights, allowing the network to group inputs into objects and output instance IDs; and
a panoptic prediction module (130) configured to provide a panoptic prediction based on the semantic prediction and the instance prediction provided by the first decoder and prediction module (110) and the second decoder and prediction module (120), respectively.

2. The system (100) of claim 1, wherein the first decoder and prediction module (110) provides a segmentation branch and the second decoder and prediction module (120) provides an instance branch, and wherein a decoder architecture of the segmentation branch and a decoder architecture of the instance branch are symmetrical.

3. The system (100) of claim 1 or 2, wherein the system (100) is configured to filter the instance prediction based on the semantic prediction to remove stuff points.

4. The system (100) of any one of claims 1 to 3, wherein the sensory information includes at least one of two-dimensional data and three-dimensional data.

5. The system (100) of claim 4, wherein the two-dimensional data are image data and/or the three-dimensional data are a Lidar point cloud.

6. The system (100) of any one of claims 1 to 5, wherein the system (100) is configured to provide the panoptic prediction to a driving assistance system.

7. A driving assistance system (300) for a vehicle, comprising:
the system (100) of any one of claims 1 to 6; and
at least one sensor (310) configured to provide the sensory information,
wherein the driving assistance system (300) is configured for automated driving based on at least the panoptic prediction.

8. A vehicle (10), comprising the system (100) of any one of claims 1 to 6 or the driving assistance system (300) of claim 7.

9. A method (400) for panoptic segmentation of sensory information, comprising:
performing feature extraction from sensory information using a shared encoder (105);
performing semantic prediction of the sensory information using a first decoder and prediction module (110);
performing instance prediction of the sensory information using a second decoder and prediction module (120), wherein the second decoder and prediction module (120) is configured to directly provide instance IDs by implementing deep learning-based clustering which instills clustering capabilities directly in the neural network weights allowing the network to group inputs into objects and output instance IDs; and
providing a panoptic prediction using a panoptic prediction module (130) based on the semantic prediction and the instance prediction provided by the first decoder and prediction module (110) and the second decoder and prediction module (120), respectively.

10. A machine readable medium comprising instructions executable by one or more processors to implement the method for panoptic segmentation of sensory information according to claim 9.

## Patentansprüche

1. System (100) zur panoptischen Segmentierung von Sensorinformationen, umfassend:
einen gemeinsamen Encoder (105), der zur Merkmalsextraktion aus Sensorinformationen konfiguriert ist;
ein erstes Decoder- und Vorhersagemodul (110), das zur semantischen Vorhersage der Sensorinformationen konfiguriert ist;
ein zweites Decoder- und Vorhersagemodul (120), das zur Instanzvorhersage der Sensorinformationen konfiguriert ist, wobei das zweite Decoder- und
Vorhersagemodul (120) konfiguriert ist, Instanz-IDs direkt bereitzustellen, indem es Deep-Learning-basiertes Clustering implementiert, welches Clustering-Fähigkeiten direkt in die Gewichte des neuronalen Netzwerks einbringt und es dem Netzwerk ermöglicht, Eingaben in Objekte zu gruppieren und Instanz-IDs auszugeben; und
ein panoptisches Vorhersagemodul (130), das konfiguriert ist, eine panoptische Vorhersage basierend auf der semantischen Vorhersage und der Instanzvorhersage bereitzustellen, die jeweils vom ersten Decoder- und Vorhersagemodul (110) und vom zweiten Decoder- und Vorhersagemodul (120) bereitgestellt werden.

2. System (100) nach Anspruch 1, wobei das erste Decoder- und Vorhersagemodul (110) einen Segmentierungszweig bereitstellt und das zweite Decoder- und Vorhersagemodul (120) einen Instanzzweig bereitstellt, und wobei eine Decoder-Architektur des Segmentierungszweigs und eine Decoder-Architektur des Instanzzweigs symmetrisch sind.

3. System (100) nach Anspruch 1 oder 2, wobei das System (100) konfiguriert ist, die Instanzvorhersage basierend auf der semantischen Vorhersage zu filtern, um Stuff-Punkte zu entfernen.

4. System (100) nach einem der Ansprüche 1 bis 3, wobei die Sensorinformationen mindestens eines von zweidimensionalen Daten und dreidimensionalen Daten umfassen.

5. System (100) nach Anspruch 4, wobei die zweidimensionalen Daten Bilddaten sind und/oder die dreidimensionalen Daten eine Lidar-Punktwolke sind.

6. System (100) nach einem der Ansprüche 1 bis 5, wobei das System (100) konfiguriert ist, die panoptische Vorhersage einem Fahrassistenzsystem bereitzustellen.

7. Fahrassistenzsystem (300) für ein Fahrzeug, umfassend:
das System (100) nach einem der Ansprüche 1 bis 6; und
mindestens einen Sensor (310), der konfiguriert ist, die Sensorinformationen bereitzustellen,
wobei das Fahrassistenzsystem (300) für automatisiertes Fahren basierend auf mindestens der panoptischen Vorhersage konfiguriert ist.

8. Fahrzeug (10), umfassend das System (100) nach einem der Ansprüche 1 bis 6 oder das Fahrassistenzsystem (300) nach Anspruch 7.

9. Ein Verfahren (400) zur panoptischen Segmentierung von Sensorinformationen, umfassend:
Durchführen einer Merkmalsextraktion aus Sensorinformationen unter Verwendung eines gemeinsamen Encoders (105);
Durchführen einer semantischen Vorhersage der Sensorinformationen unter Verwendung eines ersten Decoder- und Vorhersagemoduls (110);
Durchführen einer Instanzvorhersage der Sensorinformationen unter Verwendung eines zweiten Decoder- und Vorhersagemoduls (120), wobei das zweite Decoder- und Vorhersagemodul (120) konfiguriert ist, Instanz-IDs direkt bereitzustellen, indem es Deep-Learning-basiertes Clustering implementiert, welches Clustering-Fähigkeiten direkt in die Gewichte des neuronalen Netzwerks einbringt und es dem Netzwerk ermöglicht, Eingaben in Objekte zu gruppieren und Instanz-IDs auszugeben; und
Bereitstellen einer panoptischen Vorhersage unter Verwendung eines panoptischen Vorhersagemoduls (130) basierend auf der semantischen Vorhersage und der Instanzvorhersage, die jeweils vom ersten Decoder- und Vorhersagemodul (110) und vom zweiten Decoder- und Vorhersagemodul (120) bereitgestellt werden.

10. Maschinenlesbares Medium, umfassend Anweisungen, die von einem oder mehreren Prozessoren ausführbar sind, um das Verfahren zur panoptischen Segmentierung von Sensorinformationen nach Anspruch 9 zu implementieren.

## Revendications

1. Système (100) pour la segmentation panoptique d'informations sensorielles, comprenant :
un encodeur partagé (105) configuré pour l'extraction de caractéristiques à partir d'informations sensorielles;
un premier module de décodage et de prédiction (110) configuré pour la prédiction sémantique des informations sensorielles;
un second module de décodage et de prédiction (120) configuré pour la prédiction d'instance des informations sensorielles, où le second module de décodage et de prédiction (120) est configuré pour fournir directement des ID d'instance en mettant en œuvre un regroupement basé sur l'apprentissage profond qui instille des capacités de regroupement directement dans les poids du réseau neuronal, permettant au réseau de grouper les entrées en objets et de produire des ID d'instance; et
un module de prédiction panoptique (130) configuré pour fournir une prédiction panoptique basée sur la prédiction sémantique et la prédiction d'instance fournies respectivement par le premier module de décodage et de prédiction (110) et le second module de décodage et de prédiction (120).

2. Système (100) selon la revendication 1, dans lequel le premier module de décodage et de prédiction (110) fournit une branche de segmentation et le second module de décodage et de prédiction (120) fournit une branche d'instance, et dans lequel une architecture de décodeur de la branche de segmentation et une architecture de décodeur de la branche d'instance sont symétriques.

3. Système (100) selon la revendication 1 ou 2, dans lequel le système (100) est configuré pour filtrer la prédiction d'instance basée sur la prédiction sémantique pour supprimer les points de stuff.

4. Système (100) selon l'une quelconque des revendications 1 à 3, dans lequel les informations sensorielles comprennent au moins l'une des données bidimensionnelles et des données tridimensionnelles.

5. Système (100) selon la revendication 4, dans lequel les données bidimensionnelles sont des données d'image et/ou les données tridimensionnelles sont un nuage de points Lidar.

6. Système (100) selon l'une quelconque des revendications 1 à 5, dans lequel le système (100) est configuré pour fournir la prédiction panoptique à un système d'assistance à la conduite.

7. Système d'assistance à la conduite (300) pour un véhicule, comprenant :
le système (100) selon l'une quelconque des revendications 1 à 6; et
au moins un capteur (310) configuré pour fournir les informations sensorielles,
dans lequel le système d'assistance à la conduite (300) est configuré pour la conduite automatisée basée au moins sur la prédiction panoptique.

8. Véhicule (10), comprenant le système (100) selon l'une quelconque des revendications 1 à 6 ou le système d'assistance à la conduite (300) selon la revendication 7.

9. Une méthode (400) pour la segmentation panoptique d'informations sensorielles, comprenant:
l'exécution d'une extraction de caractéristiques à partir d'informations sensorielles en utilisant un encodeur partagé (105);
l'exécution d'une prédiction sémantique des informations sensorielles en utilisant un premier module de décodage et de prédiction (110);
l'exécution d'une prédiction d'instance des informations sensorielles en utilisant un second module de décodage et de prédiction (120), où le second module de décodage et de prédiction (120) est configuré pour fournir directement des **ID** d'instance en mettant en œuvre un regroupement basé sur l'apprentissage profond qui instille des capacités de regroupement directement dans les poids du réseau neuronal, permettant au réseau de grouper les entrées en objets et de produire des ID d'instance; et
la fourniture d'une prédiction panoptique en utilisant un module de prédiction panoptique (130) basée sur la prédiction sémantique et la prédiction d'instance fournies respectivement par le premier module de décodage et de prédiction (110) et le second module de décodage et de prédiction (120).

10. Support lisible par machine comprenant des instructions exécutables par un ou plusieurs processeurs pour mettre en œuvre le procédé de segmentation panoptique d'informations sensorielles selon la revendication 9.
